# EUROPEAN PATENT APPLICATION

(11) **EP 2 645 750 A1**
(43) Date of publication of application: **02.10.2013**
(21) Application number: 12162631.1
(22) Date of filing: 30.03.2012
(51) Int. Cl.: H04S 7/00

(54) **A hearing device with an inertial measurement unit**

(71) Applicant: GN Store Nord A/S, 2750 Ballerup (DK)
(72) Inventor: Christensen, Søren, DK-4070 Kirke Hyllinge (DK)
(74) Representative: Zacco Denmark A/S

(57) **Abstract**

A new hearing device is provided with an inertial measurement unit for determination of yaw of the orientation of a user's head, when the hearing device is worn in its intended operational position on the user's head.

## Description

### FIELD OF THE INVENTION

A new hearing device is provided with an inertial measurement unit for determination of yaw of the orientation of a user's head, when the hearing device is worn in its intended operational position on the user's head.

### BACKGROUND OF THE INVENTION

Typically, present GPS-units cannot determine orientation of a vehicle or person until the vehicle or person has moved a certain distance. Upon movement, orientation is determined as the direction defined by two successive positions along the movement. This principle works well in a car, but is not convenient for a person walking. During walking, the user of the GPS-unit is often disoriented due to the delay caused by having to walk some distance before the GPS-unit determines orientation with relation to a map of the surroundings displayed by the GPS-unit, and information on orientation is often lost again when the user stops to watch the map.

### SUMMARY OF THE INVENTION

There is a need for an improved way of determining orientation of a human.

Thus, a hearing device is provided that is configured to be head worn by a user for emission of sound towards at least one of the ears of the user, and accommodating an inertial measurement unit positioned for determining yaw of the orientation of the head of the user, when the user wears the hearing device in its intended operational position on the user's head.

The hearing device has one or more loudspeakers for emission of sound towards one or both ears of the user, when the hearing device is worn by the user in its intended operational position on the user's head. It should be noted that in the field of hearing aids, the loudspeakers are termed receivers.

The hearing device may be an Ear-Hook, In-Ear, On-Ear, Over-the-Ear, Behind-the-Neck, Helmet, Headguard, etc, headset, headphone, earphone, ear defenders, earmuffs, etc.

Further, the hearing device may be a binaural hearing aid, or a monaural hearing aid, such as a BTE, a RIE, an ITE, an ITC, a CIC, etc, monaural or binaural hearing aid.

The new hearing device may have a headband carrying one or two earphones. The headband is intended to be positioned over the top of the head of the user as is well-known from conventional headsets and headphones with one or two earphones. The inertial measurement unit may be accommodated in the headband of the hearing device.

The new hearing device may have a neckband carrying one or two earphones. The neckband is intended to be positioned behind the neck of the user as is well-known from conventional neckband headsets and headphones with one or two earphones. The inertial measurement unit may be accommodated in the neckband of the hearing device.

The orientation of the head of the user is defined as the orientation of a head reference coordinate system with relation to a reference coordinate system with a vertical axis and two horizontal axes at the current location of the user.

A head reference coordinate system is defined with its centre located at the centre of the user's head, which is defined as the midpoint of a line drawn between the respective centres of the eardrums of the left and right ears of the user.

The x-axis of the head reference coordinate system is pointing ahead through a centre of the nose of the user, its y-axis is pointing towards the left ear through the centre of the left eardrum, and its z-axis is pointing upwards.

Head yaw is the angle between the current x-axis' projection onto a horizontal plane at the location of the user and a horizontal reference direction, such as Magnetic North or True North, head pitch is the angle between the current x-axis and the horizontal plane, and head roll is the angle between the y-axis and the horizontal plane. Throughout the present disclosure, the x-axis, y-axis, and z-axis of the head reference coordinate system, are denoted the head x-axis, the head y-axis, and the head z-axis, respectively.

The inertial measurement unit may comprise accelerometers for determination of displacement of the hearing device.

The inertial measurement unit may determine head yaw based on determinations of individual displacements of two accelerometers positioned with a mutual distance for sensing displacement in the same horizontal direction when the user wears the hearing device. Such a determination is accurate when head pitch and head roll do not changed during change of the yaw value.

Alternatively, or additionally, the inertial measurement unit may determine head yaw utilizing a first gyroscope, such as a solid-state or MEMS gyroscope positioned for sensing rotation of the head x-axis projected onto a horizontal plane at the user's location with respect to a horizontal reference direction.

Similarly, the inertial measurement unit may have further accelerometers and/or further gyroscope(s) for determination of head pitch and/or head roll, when the user wears the hearing device in its intended operational position on the user's head.

In order to facilitate determination of head yaw with relation to e.g. True North or Magnetic North of the earth, the inertial measurement unit may further include a compass, such as a magnetometer.

Thus, the inertial measurement unit may have one, two or three axis sensors that provide information of head yaw, head yaw and head pitch, or head yaw, head pitch, and head roll, respectively.

The inertial measurement unit may further have sensors that provide information on one, two or three dimensional displacement.

The inertial measurement unit may further comprise a GPS-unit for determining the geographical position of the user, when the user wears the hearing device in its intended operational position on the head, based on satellite signals in the well-known way. Hereby, the user's current position and orientation can be provided to the user based on data from the hearing device.

The hearing device may accommodate a GPS-antenna configured for reception of GPS-signals, whereby reception of GPS-signals is improved in particular in urban areas where, presently, reception of GPS-signals can be difficult.

The GPS-antenna may be accommodated in a headband or a neckband of the hearing device.

The hearing device may have an interface for connection of the GPS-antenna with an external GPS-unit, e.g. a hand-held GPS-unit, a smartphone, a Personal Digital Assistant (PDA), a tablet PC, a laptop PC, a notebook PC, etc, whereby reception of GPS-signals by the hand-held GPS-unit is improved in particular in urban areas where, presently, reception of GPS-signals by hand-held GPS-units can be difficult.

The hearing device may further comprise a processor with inputs connected to the one or more sensors of the inertial measurement unit, and configured for determining and outputting values for head yaw, and optionally head pitch and optionally head roll, when the user wears the hearing device in its intended operational position on the user's head.

The processor may further have inputs connected to displacement sensors of the inertial measurement unit, and configured for determining and outputting values for displacement in one, two or three dimensions of the user when the user wears the hearing device in its intended operational position on the user's head.

Thus, the hearing device may be equipped with a complete attitude heading reference system (AHRS) for determination of the orientation of the user's head that has either solid-state or MEMS gyroscopes, accelerometers and magnetometers on all three axes. The processor of the AHRS provides digital values of the head yaw, head pitch, and head roll based on the sensor data.

The hearing device may comprise a data interface for transmission of data from the inertial measurement unit to an external device, e.g. via the processor.

The data interface may be a wired interface, e.g. a USB interface, or a wireless interface, such as a Bluetooth interface, e.g. a Bluetooth Low Energy interface.

The hearing device may comprise an audio interface for reception of an audio signal from an external device.

The audio interface may be a wired interface or a wireless interface.

The data interface and the audio interface may be combined into a single interface, e.g. a USB interface, a Bluetooth interface, etc.

The hearing device may for example have a Bluetooth Low Energy data interface for exchange of head jaw values and control data, and a wired audio interface for transmission of sound signals.

The hearing device may comprise an ambient microphone for receiving ambient sound for user selectable transmission towards at least one of the ears of the user.

In the event that the hearing device provides a sound proof, or substantially, sound proof, transmission path for sound emitted by the loudspeaker(s) of the hearing device towards the ear(s) of the user, the user may be acoustically disconnected in an undesirable way from the surroundings. This may for example be dangerous when moving in traffic.

The hearing device may have a user interface, e.g. a push button, so that the user can switch the microphone on and off as desired thereby connecting or disconnecting the ambient microphone and one loudspeaker of the hearing device.

The hearing device may have a mixer with an input connected to an output of the ambient microphone and another input connected to another source of an audio signal, e.g. an external device supplying an audio signal, and an output providing an audio signal that is a weighted combination of the two input audio signals.

The user input may further include means for user adjustment of the weights of the combination of the two input audio signals, such as a dial, or a push button for incremental adjustment.

The hearing device may have a threshold detector for determining the loudness of the ambient signal received by the ambient microphone, and the mixer may be configured for including the output of the ambient microphone signal in its output signal only when a certain threshold is exceeded by the loudness of the ambient signal.

Further ways of controlling audio signals from an ambient microphone and a voice microphone is disclosed in US 2011/0206217 A1.

### BRIEF DESCRIPTION OF THE DRAWINGS

Below, the invention will be described in more detail with reference to the exemplary embodiments illustrated in the drawings, wherein
- Fig. 1: shows three embodiments of the new hearing device,
- Fig. 2: shows (a) a head reference coordinate system and (b) head yaw,
- Fig. 3: shows (a) head pitch and (b) head roll,
- Fig. 4: is a block diagram of one embodiment of the new hearing device, and
- Fig. 5: illustrates one exemplary use of the new hearing device.

The new hearing device will now be described more fully hereinafter with reference to the accompanying drawings, in which various embodiments are shown. The accompanying drawings are schematic and simplified for clarity, and they merely show details which are essential to the understanding of the new hearing device, while other details have been left out. The new hearing device may be embodied in different forms not shown in the accompanying drawings and should not be construed as limited to the embodiments and examples set forth herein. Rather, these embodiments and examples are provided so that this disclosure will be thorough and complete, and will fully convey the scope of the invention to those skilled in the art.

Similar reference numerals refer to similar elements in the drawings.

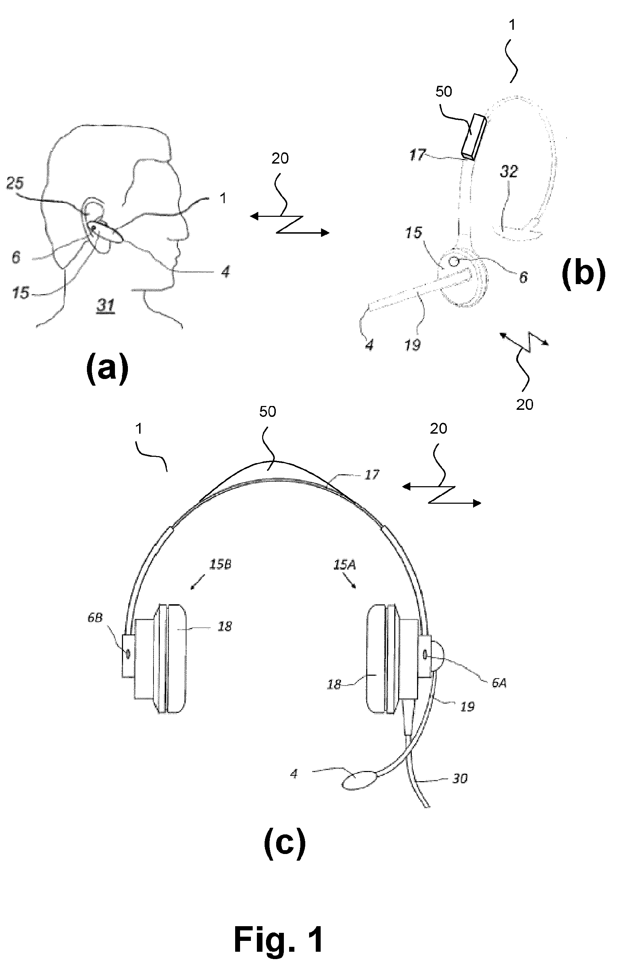

Fig. 1 (a) shows an embodiment of the new hearing device 1 having a housing similar to and worn in the same way as a conventional Bluetooth headset of the type especially intended for use with a Bluetooth enabled mobile phone.

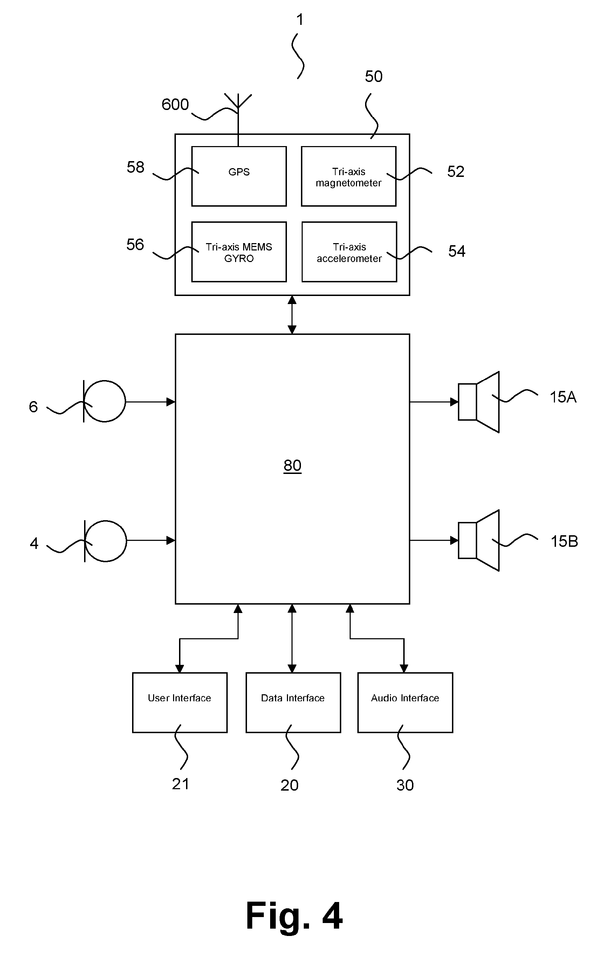

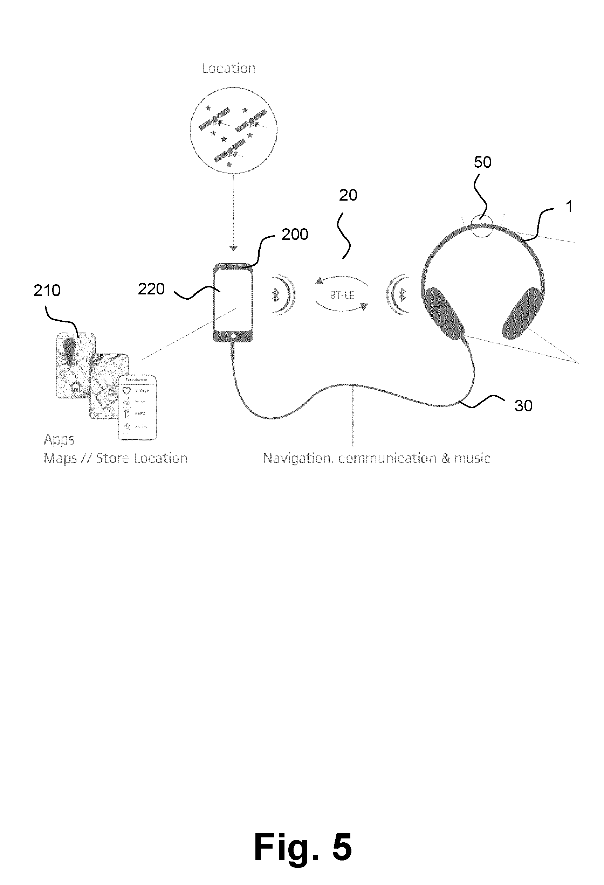

The illustrated new hearing device 1 has an earphone 15, which is arranged at the outer ear 25 of a user 31. In this embodiment, the earphone 15 is attached by inserting a non-visible earbud in the ear. However, other attachment devices, such as an ear hook, ear loop, a headband, could be used. A Bluetooth transceiver in the earphone 15 is wirelessly connected by a Bluetooth link 20 to a Bluetooth transceiver in a hand-held device (not shown), e.g. a mobile phone, an Ipod, a GPS-unit, a smart phone, a tablet PC, a remote control for the hearing device, etc. The earphone housing 16 is elongate and points in the direction of the mouth of the user 31. At the free end of the earphone housing 16 closest to the mouth, the earphone 15 is provided with a conventional voice microphone 4 for picking up the user's voice during two-way communication via the mobile phone (not shown). At the opposite end of the earphone 15, an ambient microphone 6 is provided for picking up ambient sounds, which the user 31 can select to mix with the sound received from the mobile phone (not shown) as disclosed further above. The inertial measurement unit (not visible) is accommodated in the earphone housing 16. The user interface of the hearing device 1 is not visible, but may include one or more push buttons, and/or one or more dials as is well-known from conventional Bluetooth headsets. The operation of the illustrated new hearing device 1 is explained further below in connection with Figs. 4 and 5.

Fig. 1 (b) shows an embodiment of the new hearing device 1 with a headband 17 and an earphone housing 16 similar to conventional headsets originally designed for office use and operating according to the DECT standard together with a headset base.

The illustrated new hearing device 1 comprises a headband 17 with an earphone 15 at one end and an end piece 32 at the other end. A microphone boom 19 extends from the earphone 15 in the direction of the user's mouth during use, and a voice microphone 4 is provided at the free end of the microphone boom 19. An ambient microphone 6 is provided on the earphone 15.

A Bluetooth transceiver in the earphone 15 is wirelessly connected by a Bluetooth link 20 to a Bluetooth transceiver in a hand-held device (not shown), e.g. a mobile phone, an Ipod, a GPS-unit, a smart phone, a remote control for the hearing device, etc.

The user 31 can select to mix ambient sounds picked up by the ambient microphone 6 with sound received from the hand-held device (not shown) as disclosed further above.

An inertial measurement unit 50 is accommodated in housing mounted on or integrated with the headband 17 and interconnected with components in the earphone housing 16 through wires running internally in the headband 17 between the inertial measurement unit 50 and the earphone 15.

The user interface of the hearing device 1 is not visible, but may include one or more push buttons, and/or one or more dials as is well-known from conventional Bluetooth headsets. The operation of the illustrated new hearing device 1 is explained further below in connection with Figs. 4 and 5.

Fig. 1 (c) shows an embodiment of the new hearing device 1 having a headband 17 carrying two earphones 15A, 15B similar to a conventional corded headset with two earphones 15A, 15B interconnected by a headband 17.

Each earphone 15A, 15B of the illustrated hearing device comprises an ear pad 18 for enhancing the user comfort and blocking out ambient sounds during listening or two-way communication.

A microphone boom 19 with a voice microphone 4 at the free end extends from the first earphone 15A. The housing of the first earphone 15A comprises a first ambient microphone 6A and the housing of the second earphone 15B comprises a second ambient microphone 6B.

A cord 30 extends from the first earphone 15A to a hand-held device (not shown), e.g. a mobile phone, an Ipod, a GPS-unit, a smart phone, a remote control for the hearing device, etc.

The user 31 can select to mix ambient sounds picked up by the ambient microphones 6A, 6B with sound received from the hand-held device (not shown) as disclosed further above.

When mixed-in, sound from the first ambient microphone 6A is directed to the speaker of the first earphone 15A, and sound from the second ambient microphone 6B is directed to the speaker of the second earphone 15B. Thus, the user experiences a spatial effect, whereby he is able to hear form which direction ambient sounds are coming.

An inertial measurement unit 50 is accommodated in a housing mounted on or integrated with the headband 17 and interconnected with components in the earphone housing 16 through wires running internally in the headband 17 between the inertial measurement unit 50 and the earphone 15.

The user interface of the hearing device 1 is not visible, but may include one or more push buttons, and/or one or more dials as is well-known from conventional headsets. The operation of the illustrated new hearing device 1 is explained further below in connection with Figs. 4 and 5.

The orientation of the head of the user is defined as the orientation of a head reference coordinate system with relation to a reference coordinate system with a vertical axis and two horizontal axes at the current location of the user.

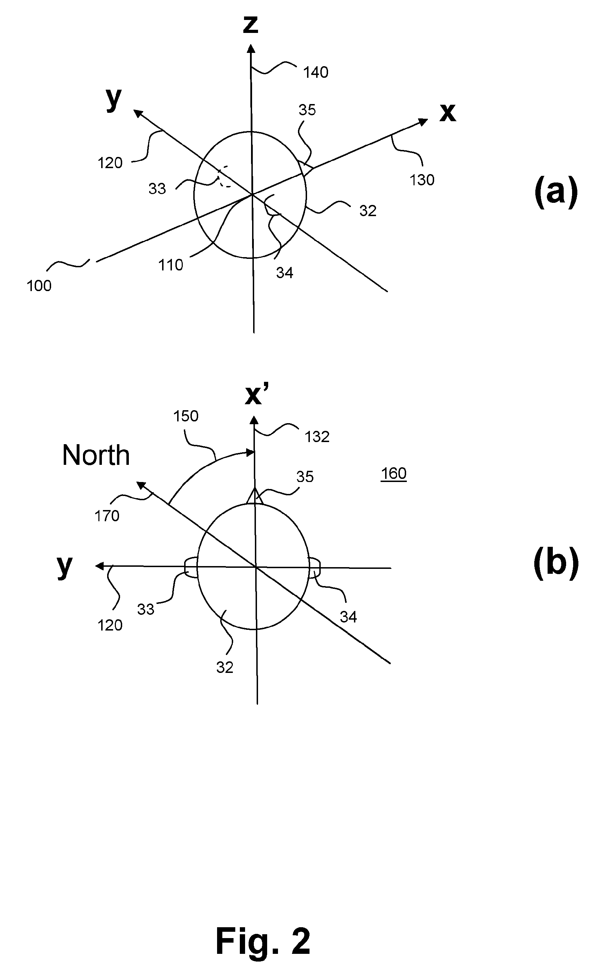

Fig. 2(a) shows a head reference coordinate system 100 that is defined with its centre 110 located at the centre of the user's head 32, which is defined as the midpoint 110 of a line 120 drawn between the respective centres of the eardrums (not shown) of the left and right ears 33, 34 of the user.

The x-axis 130 of the head reference coordinate system 100 is pointing ahead through a centre of the nose 35 of the user, its y-axis 112 is pointing towards the left ear 33 through the centre of the left eardrum (not shown), and its z-axis 140 is pointing upwards.

Fig. 2(b) illustrates the definition of head yaw 150. Head yaw 150 is the angle between the current x-axis' projection x' 132 onto a horizontal plane 160 at the location of the user, and a horizontal reference direction 170, such as Magnetic North or True North.

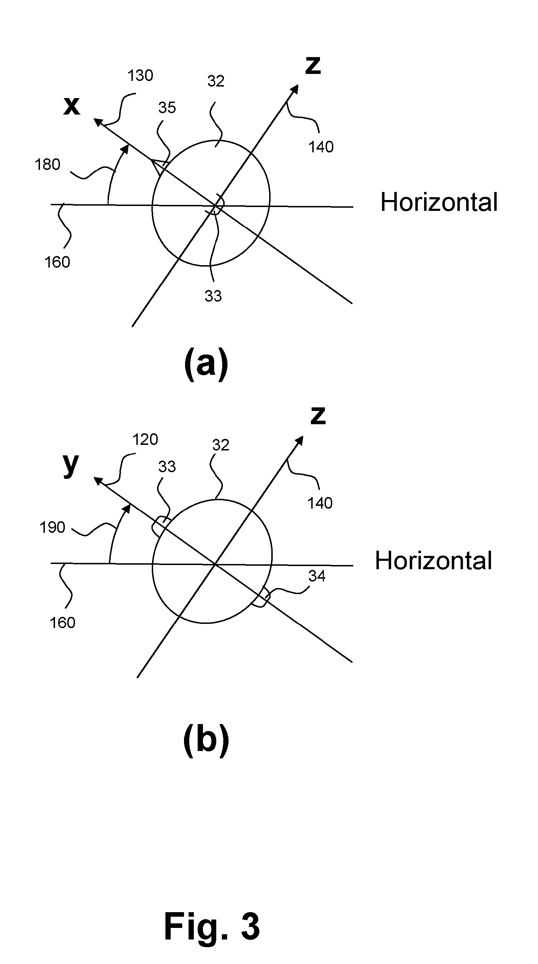

Fig. 3(a) illustrates the definition of head pitch 180. Head pitch 180 is the angle between the current x-axis 130 and the horizontal plane 160.

Fig. 3(b) illustrates the definition of head roll 190. Head roll 190 is the angle between the y-axis and the horizontal plane.

Fig. 4 shows electronic parts of the new hearing device 1 that may be incorporated into any of the embodiments shown in Fig. 1, and other embodiments.

The illustrated hearing device 1 comprises electronic components including one or two loudspeakers 15A, 15B for emission of sound towards one or both ears of the user (not shown), when the hearing device 1 is worn by the user in its intended operational position on the user's head.

It should be noted that in addition to the embodiments shown in Fig, 1, the hearing device may be of any known type including an Ear-Hook, In-Ear, On-Ear, Over-the-Ear, Behind-the-Neck, Helmet, Headguard, etc, headset, headphone, earphone, ear defenders, earmuffs, etc.

Further, the hearing device may be a binaural hearing aid, or a monaural hearing aid, such as a BTE, a RIE, an ITE, an ITC, a CIC, etc, monaural or binaural hearing aid.

The hearing device further has a voice microphone 4 accommodated in an earphone housing or provided at the free end of a microphone boom mounted to an earphone housing.

The hearing device 1 further has one or two ambient microphones 6A, 6B, e.g. at each ear, for picking up ambient sounds.

The hearing device has an inertial measurement unit 50 positioned for determining head yaw, head pitch, and head roll, when the user wears the hearing device in its intended operational position on the user's head.

The illustrated inertial measurement unit 80 has tri-axis MEMS gyros 56 that provide information on head yaw, head pitch, and head roll in addition to tri-axis accelerometers 54 that provide information on three dimensional displacement of the hearing device 1.

Optionally, the inertial measurement unit 50 also has a GPS-unit 58 for determining the geographical position of the user, when the user wears the hearing device in its intended operational position on the head, based on satellite signals in the well-known way. Hereby, the user's current position and orientation can be provided to the user based on data from the hearing device.

Optionally, the hearing device accommodates a GPS-antenna configured for reception of GPS-signals, whereby reception of GPS-signals is improved in particular in urban areas where, presently, reception of GPS-signals can be difficult.

In a hearing device 1 without the GPS-unit 58, the hearing device 1 has an interface for connection of the GPS-antenna with an external GPS-unit, e.g. a hand-held GPS-unit, whereby reception of GPS-signals by the hand-held GPS-unit is improved in particular in urban areas where, presently, reception of GPS-signals by hand-held GPS-units can be difficult.

The illustrated inertial measurement unit 50 also has a magnetic compass in the form of a tri-axis magnetometer 52 facilitating determination of head yaw with relation to the magnetic field of the earth, e.g. with relation to Magnetic North.

The hearing device 1 has a processor 80 with input/output ports connected to the sensors of the inertial measurement unit 50, and configured for determining and outputting values for head yaw, head pitch, and head roll, when the user wears the hearing device in its intended operational position on the user's head.

The processor 80 may further have inputs connected to displacement sensors of the inertial measurement unit, and configured for determining and outputting values for displacement in one, two or three dimensions of the user when the user wears the hearing device in its intended operational position on the user's head, for example to be used for tracking in the event that GPS-signals are lost.

Thus, the illustrated hearing device 1 is equipped with a complete attitude heading reference system (AHRS) for determination of the orientation of the user's head that has MEMS gyroscopes, accelerometers and magnetometers on all three axes. The processor provides digital values of the head yaw, head pitch, and head roll based on the sensor data.

The hearing device 1 has a data interface 20 for transmission of data from the inertial measurement unit after processing by the processor 80 to an external device, e.g. a GPS-unit. The data interface 20 is a Bluetooth Low Energy interface.

The hearing device 1 further has a conventional wired audio interface for audio signals from the voice microphone 4 and for audio signals to the loudspeakers 15A, 15B as is well-known in the art.

This combination of a low power wireless interface for data communication, and a wired interface for audio signals provides a superior combination of high quality sound reproduction and low power consumption of the hearing device 1.

The hearing device 1 has a user interface 21, e.g. with push buttons and dials as is well-known from conventional headsets, for user control and adjustment of the hearing device 1 and possibly external devices interconnected with the hearing device 1.

Fig. 5 illustrates an exemplary use of the new hearing device 1 together with a smart phone 200, e.g. an Iphone, an Android phone, etc. The hearing device 1 is connected to the smart phone 200 with a chord 30 providing a wired audio interface between the two units 1, 200 for transmission of speech and music from the smart phone 200 to the hearing device 1, and speech from the voice microphone 4 (not shown) to the smart phone 200 as is well-known in the art.

As indicated in Fig. 5 by the various exemplary GPS-images 210 displayed on the smart phone display 220, a GPS-app is also executed by the smart phone in addition to the smart phone 200 playing music, and performing telephone calls when required. Spoken guiding instructions from the GPS-app are transmitted to the hearing device 1 through the audio interface 30 as is well-known in the art, e.g. during reception of spoken instructions, other audio signals intended for the loudspeakers 15A, 15B are muted.

The GPS-app is configured for data communication with the hearing device 1 through a Bluetooth Low Energy wireless interface 20 available in the smart phone 200 and the hearing device 1, e.g. for reception of head yaw from the inertial measurement unit 50 of the hearing device 1. In this way, the GPS-app can control display of maps on the display of the smart phone 200 in accordance with orientation of the head of the user as projected onto a horizontal plane, i.e. typically corresponding to the plane of the map. For example, the map may be displayed with the position of the user at a central position of the display, and the head x-axis pointing upwards.

The user may calibrate directional information by indicating when his or her head x-axis is kept in a known direction, for example by pushing a certain push button when looking due North, typically True North. The user may obtain information on the direction due True North, e.g. from the position of the Sun on a certain time of day, or the position of the North Star, or from a map, etc.

## Claims

1. A hearing device configured to be head worn for emission of sound towards at least one of the ears of a user and accommodating an inertial measurement unit positioned for determining head yaw, when the user wears the hearing device in its intended operational position on the user's head.

2. A hearing device according to claim 1, wherein the inertial measurement unit comprises a first gyroscope for determining head yaw.

3. A hearing device according to claim 2, wherein the inertial measurement unit comprises a second gyroscope for determining head pitch, when the user wears the hearing device in its intended operational position on the user's head.

4. A hearing device according to any of the previous claims, wherein the inertial measurement unit comprises at least one accelerometer for determining displacement of the user, when the user wears the hearing device in its intended operational position on the user's head.

5. A hearing device according to claim 4, wherein the inertial measurement unit comprises a plurality of accelerometers with mutually orthogonal measurement axes.

6. A hearing device according to any of the previous claims, wherein the inertial measurement unit comprises an electronic compass.

7. A hearing device according to any of the previous claims, wherein the inertial measurement unit comprises a GPS unit for determining the geographical position of the user, when the user wears the hearing device in its intended operational position on the user's head.

8. A hearing device according to any of the previous claims, comprising a processor that is connected with the inertial measurement unit and configured to process data from the sensor(s) of the inertial measurement unit into head yaw values.

9. A hearing device according to claim 6 and 8, wherein the processor is configured to provide the head yaw values relative to north.

10. A hearing device according to any of the previous claims, comprising a data interface for transmission of data from the inertial measurement unit to an external device.

11. A hearing device according to claim 10, wherein the data interface is a wireless interface, such as a Bluetooth interface, such as a Bluetooth Low Energy interface.

12. A hearing device according to any of the previous claims, comprising an audio interface, such as a wired interface, for reception of an audio signal from an external device.

13. A hearing device according to any of the previous claims, comprising a headband intended to be positioned across the top of the head of the user, when the user wears the hearing device in its intended operational position on the user's head, and wherein the inertial measurement unit is accommodated by the headband.

14. A hearing device according to any of the previous claims, comprising a neckband intended to be positioned behind the neck of the user, when the user wears the hearing device in its intended operational position on the user's head, and wherein the inertial measurement unit is accommodated by the neckband.

15. A hearing device according to any of the previous claims, accommodating a GPS-antenna.

16. A hearing device according to claim 15, comprising an interface for connection of the GPS-antenna with an external GPS-device.

17. A hearing device according to any of the previous claims, comprising an ambient microphone for receiving ambient sound for user selectable transmission towards at least one of the ears of the user.

18. A system with a display and a GPS-receiver and a hearing device according to any of the previous claims, comprising a controller that is configured to display a map on the display, the map including a position determined based on signals received by the GPS-receiver, with an orientation in accordance with a head yaw value provided by the hearing device.
